(19) Europäisches Patentamt
European Patent Office
Office européen des brevets

(11) Veröffentlichungsnummer: **0 139 214**
**B1**

(12) # EUROPÄISCHE PATENTSCHRIFT

(45) Veröffentlichungstag der Patentschrift: **21.03.90**

(51) Int. Cl.⁵: **C 07 C 215/06**, C 07 C 213/06 // C09D7/12

(21) Anmeldenummer: **84110930.9**

(22) Anmeldetag: **13.09.84**

(54) **Wasserlösliche Triethanolamintitanate.**

(30) Priorität: **12.10.83 DE 3337099**

(43) Veröffentlichungstag der Anmeldung: **02.05.85 Patentblatt 85/18**

(45) Bekanntmachung des Hinweises auf die Patenterteilung: **21.03.90 Patentblatt 90/12**

(84) Bennante Vertragsstaaten: **BE DE FR GB NL**

(56) Entgegenhaltungen:
**DE-A-2 244 462**
**GB-A-922 456**
**US-A-4 159 209**

**DR. H. KITTEL "Lehrbuch der Lacake und Beschichtungen", Band III, "Lösemittel, Weichmacher, Additive, Zwischenprodukte", 1976 VERLAG W.A.COLOMB IN DER H: HEENEMANN GMBH, Berli, Seiten 396-398.**
**CHEMICAL ABSTRACTS, Band 95, Nr. 6, 1o. August 1981, Columbus, Ohio, USA. R.K. KANJOLIA et al. "Thin (IV) and titanium (IV) derivatives of 2-methoxyethanol" Seite 754, Zusammenfassung Nr. 5398on**
**Kirk Othmer Encyclopedia of Technical Technology 3rd. Ed, vol.23, 179, 187, 19o, 192-199; J. Chem Soc (A) 1971,244o ff**
**Die Akte enthält technische Angaben, die nach dem Eingang der Anmeldung eingereicht wurden und die nicht in dieser Patentschrift enthalten sind.**

(73) Patentinhaber: **HÜLS AKTIENGESELLSCHAFT**
**Paul-Baumann-Strasse 1**
**D-4370 Marl 1 (DE)**

(72) Erfinder: **Barfurth, Dieter**
**Adenauerstrasse 34**
**D-5210 Troisdorf-Spich (DE)**
Erfinder: **Nestler, Heinz, Dr.**
**Rembrandtstrasse 73**
**D-5210 Troisdorf-Eschmar (DE)**

**EP 0 139 214 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Gegenstand der vorliegenden Erfindung sind Triethanolamintitanate, die auch in großer Verdünnung mit Wasser stabil sind und keine Trübungen in verdünnten wäßrigen Lösungen ergeben.

Die im Handel üblichen Lösungen von Triethanolamintitanat sind etwa 80-%-ige Lösungen von Dialkoxi-ditriethanolaminotitanat, die durch Umsetzung von Tetraalkoxytitanat mit zwei Mol Triethanolamin erhalten werden. Die bevorzugt eingesetzte Alkoxygruppe ist die Isopropoxy-Gruppe. Das entsprechende Triethanolamin-titanchelat liegt als Lösung in Isopropanol vor. Diese Lösungen finden z. B. Anwendung bei der Thixotropierung von Dispersionen, bei der Vernetzung von Hydroxylgruppen enthaltenden Polymeren oder bei der Kaltbeschichtung von Glas.

In manchen Anwendungsgebieten ist es vorteilhaft, diese Triethanolamintitanat-Lösungen in stark verdünnten wäßrigen Lösung einzusetzen. Dabei kommen oft nur 1 bis 2 gew.-%-ige wäßrige Lösungen zum Einsatz. Es ist zwar möglich, die bekannten alkoholischen Triethanolamintitanat-Lösungen mit Wasser zu verdünnen, doch sind die erhaltenen Lösungen nicht stabil und werden schnell trübe, so daß sie für den gewünschten Einsatzzweck nicht mehr verwendbar sind.

Es bestand deshalb die Aufgabe, Triethanolamintitanate aufzufinden, die wasserlöslich sind und deren wäßrige Lösungen auch bei Verdünnungen bis zu 1 Gew.-% noch stabil sind.

Die an sich naheliegende Lösung dieser Aufgabe, die bekannten Triethanolamintitanat-Lösungen erst durch Alkohole oder Glycolether auf einen Titanatgehalt von etwa 40 bis 50 Gew.-% zu verdünnen und anschließend die weitere Verdünnung mit Wasser durchzuführen, führt nicht zu dem gewünschten Erfolg, da auch die auf diese Weise erhaltenen wäßrigen Lösungen nicht stabil sind. Auch Umsetzungsprodukte aus Titanorthoestern, Alkanolaminen und Glycolethern, wie sie in der DE-A-2 244 462 beschrieben sind, führen nicht zur Lösung des genannten Problems.

In Erfüllung der obengenannten Aufgabe wurden nun Triethanolamintitanate gefunden, die dadurch gekennzeichnet sind, daß eine oder beide Alkoxygruppen durch an das zentrale Ti-Atom gebundene Glycolethergruppen ersetzt sind. Diese Triethanolamintitanate oder ihre Lösungen in Glycolethern sind gut wasserlöslich und auch in verdünnten wäßrigen Lösungen stabil. Selbst 1 gew.-%-ige Lösungen zeigen nach einer Standzeit von mehreren Monaten keine Trübungen.

In den erfindungsgemäßen Triethanolamintitanaten ist eine oder beide der Alkoxygruppen der bekannten Dialkoxydiethanolamintitanate durch eine Glycolethergruppe ersetzt. Die neuen Verbindungen lassen sich demzufolge allgemein auch als Monoalkoxy-monoalkoxyalkylenoxy-bis(triethanolamin)titanate oder als Di-alkoxyalkylenoxy-bis(triethanolamin)titanate bezeichnen. Die Di-alkoxyalkylenoxy-Verbindungen sind die bevorzugten Verbindungen.

Die neuen Triethanolamintitanate sind auch in Glycolethern gut löslich. Diese Lösungen lassen sich mit Wasser gut auf wäßrige Lösungen mit Triethanolamintitanat-Gehalten unter 5 Gew.-% verdünnen, ohne daß aus diesen Lösungen nach längerem Stehen ein Niederschlag ausfällt oder Trübungen auftreten. In der Praxis empfiehlt sich der Einsatz solcher Glycolether-Lösungen, da diese bei der Herstellung der neuen Verbindungen direkt anfallen können.

Die Herstellung erfolgt entweder aus den bekannten Titan(IV)-dialkoxy-di-triethanolaminen oder deren alkoholischen Lösungen. Diese werden mit soviel Glycolether versetzt, wie zum Austausch einer oder beider Alkoxygruppen pro Mol Titanverbindung notwendig ist. Anschließend wird auf Temperaturen bis etwa 80°C erwärmt und der abgespaltene Alkohol abdestilliert. Die Abdestillation erfolgt zweckmäßigerweise unter Vakuum. Wenn das als Ausgangsprodukt eingesetzte Triethanolamintitanat als alkoholische Lösung vorliegt, wird zusätzlich zu dem abgespaltenen Alkohol auch noch der Lösemittel-Alkohol abdestilliert.

Bei der Herstellung der neuen Triethanolamintitanate aus den handelsüblichen Dialkoxy-di-triethanolamintitanat -Lösungen, die pro Mol Titanat zwei Mol Alkohol enthalten, müssen demzufolge drei Mol Alkohol abdestilliert werden, wenn man die neuen Mono-alkoxy-alkylenoxytriethanolamintitanate erhalten will. Wenn beide Alkoxygruppen der Ausgangsverbindung ausgetauscht werden sollen, müssen vier Mol Alkohol aus dem Ansatz entfernt werden.

Wenn die Herstellung der neuen Verbindungen in lösemittelfreier Form gewünscht wird, dann wird bei der genannten Herstellungsart nur soviel Glycolether eingesetzt, wie den auszutauschenden, gebundenen Alkohol entspricht. Die Abdestillation des Alkohols wird dann solange fortgesetzt, bis sowohl der ursprünglich gebundene als auch der als Lösungsmittel eingesetzte einfache Alkohol abdestilliert ist.

Es ist jedoch auch möglich und in manchen Fällen auch empfehlenswert, gleich bei der Herstellung der neuen Titanate Lösungen in Glycolether herzustellen, deren Konzentration aus praktischen Gründen mindestens 40 % betragen sollte. Man geht dann so vor, daß man zusätzlich zu der Menge des Glycolethers, die für den Austausch des gebundenen Alkohols notwendig ist, dem Ansatz noch soviel an Glycolether zufügt, wie der gewünschten Konzentration der herzustellenden Lösung entspricht. Auch dann wird sowohl der in dem Ausgangsprodukt enthaltene gebundene als auch eventuell der als Lösungsmittel enthaltene einfache Alkohol möglichst quantitativ entfernt.

Es ist weiterhin auch möglich, die neuen Triethanolamintitanate aus Titantetrachlorid in der Weise herzustellen, daß man aus diesem zuerst durch Umsetzung mit vier Mol Glycolether das Tetra-alkoxy-alkylenoxytitanat herstellt und dieses mit zwei Mol Triethanolamin umsetzt, wobei es frei steht, den freiwerdenden Glycolether abzudestillieren oder die entstehende Glycolether-Lösung direkt zu verwerten.

Erfindungsgemäß sollen unter Glycolethern sowohl Mono- als auch Polyglycolether verstanden werden, die der allgemeinen Formel

$HO-[CH_2-CH_2-O]_n-R$

entsprechen, wobei

R für Alkylreste mit 1 bis 4 C-Atomen steht und n Werte zwischen 1 und 8, vorzugsweise zwischen 1 und 4 annehmen kann. Beispiele für solche Glycolether sind Glycol-monomethylether, Glycol-monoethylether, Glycolmonobutylether, Diglycol-monomethylether, Diglycol-monoethylether und Diglycol-monobutylether.

Anstelle der Hydroxylgruppen in der oben genannten Formel kann auch eine R'–C(O)–O-Gruppe stehen, in der R' eine Alkylgruppe mit 1 bis 3 C-Atomen sein kann. Beispiele für solche, auch als Glycoletherester bezeichneten Verbindungen, sind Glycolmonomethylether-acetat oder Diglycolmonobutyletheracetat. Allgemein werden diese Glycoletherester auch als Alkylglycolcarboxylate bezeichnet. Diese Alkylglycolcarboxylate können sowohl als Lösungsmittel für die neuen Triethanolamintitanate eingesetzt werden, als auch zur Einführung des Alkylglycolrestes dienen.

Das Dialkoxy-di-triethanolamintitanat, das bevorzugt zur Herstellung der neuen Titanate eingesetzt wird, ist das Diisopropoxy-di-triethanolamintitanat, das allgemein als 80 %-ige Lösung in Isopropylalkohol vorliegt. Jedoch lassen sich auch andere Dialkoxytriethanolamintitanate als Ausgangsverbindungen einsetzen, bei denen die Isopropoxygruppe z. B. durch die n-Butoxy-, n-Propoxy-, iso-Butoxy- oder die Ethoxygruppe ersetzt ist und die in den, den Alkoxygruppen entsprechenden, Alkoholen gelöst vorliegen.

Die neuen erfindungsgemäßen Titanchelate sind hellgelbe, viskose Flüssigkeiten. Ihr Titangehalt entspricht größenordnungsmäßig dem des Triethanolamintitanats (ca. 8,4 % Ti). Dimethoxyethoxy-ethoxy-bis-triethanolaminotitanat enthält 8,5 % Titan.

Die erfindungsgemäßen Titanchelate lassen sich überall dort einsetzen, wo üblicherweise aminhaltige Titanate Verwendung finden. Bevorzugt werden sie jedoch dort eingesetzt, wo bei diesen bekannten Verwendungszwekken wässrige Lösungen notwendig sind, wie z. B. bei der Vernetzung harzhaltiger Zubereitungen, die als Lackbindemittel in wässriger Lösung Verwendung finden. In solchen wässrigen Lösungen sind sie in Gegensatz zu den bisher bekannten Dialkoxy-bis-triethanolamintitanaten beständig, führen nicht zu ungewünschten Ausfällungen oder Trübungen und zeigen auch in diesen verdünnten Lösungen Vernetzungseigenschaften, die gegenüber denen der bekannten Triethanolamintitanate mindestens gleichwertig, oft sogar noch besser sind.

Die nachfolgenden Beispiele dienen der Beschreibung einiger Wege zur Herstellung und Anwendung der neuen Titanchelate, wobei die vorgenommene Auswahl keine Einschränkung aller möglichen Varianten darstellen soll.

**Beispiel 1**

**Herstellung von Di-methoxyethoxyethoxy-bis-(triethanolamino)-titan**

In den 1 l-Kolben eines Labor-Vacuumrotationsverdampfers werden 291 g handelsübliches Triethanolamintitanat (0,5 Mol als 80 %-ige Lösung in Isopropanol) eingewogen und mit 120 g Methyldiglycol (1 Mol, 2-(2-Methoxy-ethoxy)ethanol) versetzt. Anschließend wird, beginnend bei einer Wasserbadtemperatur von 35°C, die im Laufe von 6 Stunden bis auf 80°C gesteigert wird, und bei einem verminderten Druck von 25 mbar sowohl das im Ausgangsmaterial vorhandene wie auch das durch die Austauschreaktion des Triethanolamintitanats mit dem Methyldiglycol entstandene Isopropanol abdestilliert: Ausbeute 119,4 g (99,5 % d. Therorie = 120 g, 2 Mol). Das so erhaltene Produkt ist eine gelbe, etwas viskose Flüssigkeit mit folgenden Kennzahlen:

| | |
|---|---|
| Brechungszahl $n^{20}_D$ | = 1,5190 |
| Viskosität (20°C) | = 264 mPas |
| Titandioxidgehalt | = 13,4 % |
| Löslichkeit | = Löslich in Isopropanol, Toluol und Methylenchlorid. 10-%-ige Lösungen in diesen Lösungsmitteln sind über mindestens drei Monate stabil. |

**Beispiel 2**

Prüfung der Löslichkeit des erfindungsgemäßen Produkts nach Beispiel 1 in Wasser – Vergleich mit üblichem Triethanolamintitanat

| Produkt | Zustand einer 2,5 % Titanchelat enthaltenden Lösung in entsalztem Wasser |
|---|---|
| Gemäß Beispiel 1 | klare Lösung |
| gemäß Beispiel 1, verdünnt mit Methyldiglycol auf 50 % | klare Lösung |
| handelsübliches Triethanolamintitanat = 80 % in Isopropanol | trübe Lösung |
| Triethanolamintitanat, verdünnt mit Isopropanol auf 50 % | trübe Lösung |
| Triethanolamintitanat, verdünnt mit Methyldiglycol auf 50 % | opalisierend trübe Lösung |

**Beispiel 3**

Anwendung eines erfindungsgemäßen Titanchelats als vernetzendes Additiv für einen wasserverdünnten Lack auf Basis saurer Phthalatharze.

Ein im Handel erhältliches saures Phthalatharz (Phthalopal® LR 8525, Hersteller BASF AG) wird nach folgender Rezeptur zu einem Klarlack umgesetzt:

250 g dieses Harzes werden in einer Mischung aus 220 g n-Propanol, 500 g Wasser und 30 g 2-Amino-2-methylpropanol-1 aufgelöst.

Zu diesem Klarlack werden jeweils 2 % der in der nachstehenden Tabelle aufgeführten Titanchelate gegeben. Die so modifizierten Klarlacke zeigten folgende Beständigkeiten:

| Additiv | Aussehen des Klarlack nach einer Lagerung von 2 Tagen |
|---|---|
| Erfindungsgemäßes Titanchelat als 50-%-ige Lösung in Methyldiglycol | klar, auch noch nach einigen Wochen |
| Handelsübliches Triethanolamintitanat | nach wenigen Stunden trübe |

Die vernetzende Wirkung der Titanchelat-Additive wurde nach Aufziehen des entsprechenden Klarlacks auf entfettetes Aluminium und Einbrennen bei 150°C (45 Minuten) mittels des MEK-Test geprüft: Die Zahl der Reibungen mit einem Methylethylketon (MEK)-getränkten Lappen, die notwendig ist, um den Lackfilm abzulösen, gilt als Maß für die Vernetzung der Lackschicht. Folgende Werte wurden ermittelt:

| | |
|---|---|
| Klarlack ohne Zusatz | 1 Reibung |
| Klarlack + Titanchelat nach Beispiel 1 | 85 Reibungen |
| Klarlack + Triethanolamintitanat | 71 Reibungen |

**Patentansprüche**

1. Wasserlösliche Triethanolamintitanate, dadurch gekennzeichnet, daß eine oder beide Alkoxygruppen durch an das zentrale Ti-Atom gebundene Glykolethergruppen ersetzt sind.

2. Di-methoxi-ethoxi-ethoxi-bis-(triethanolamino)-titan (IV).

3. Lösungen von Triethanolamintitanaten gemäß Anspruch 1 oder 2 in Glycolethern mit Anteilen dieser Titanate zwischen 40 und 99 Gew.-%.

4. Verfahren zur Herstellung von Glycolethergruppen enthaltenden Triethanolamintitanaten gemäß Anspruch 1, dadurch gekennzeichnet, daß man Dialkoxi-bis(triethanolamino)titan (IV) mit mindestens einem der Alkoxigruppe entsprechendem Äquivalent an Glycolethern umsetzt, den abgespaltenen Alkohol und eventuell zusätzlich den als Lösungsmittel des Dialkoxi-bis(triethanolamino)titans vorhandenen Alkohol von dem erhaltenen Produkt abtrennt.

5. Verfahren zur Herstellung von Glycolethergruppen enthaltenden Triethanolamintitanaten gemäß Anspruch 1, dadurch gekennzeichnet, daß man Tetra-alkoxialkylenoxititanate mit Triethanolamin umsetzt und den abgespaltenen Glycolmonoether abdestilliert.

**Claims**

1. Water soluble triethanolamine titanates, characterised in that one or both alkoxy groups are replaced by glycol ether groups connected to the central Ti-atom.

2. Di-methoxy-ethoxy-ethoxy-bis-(triethanolamino)-titanium (IV).

3. Solutions of triethanolamine titanates according to claim 1 or 2, in glycol ethers with proportions of these titanates between 40 and 99 % by weight.

4. Process for the production of glycol ether group-containing triethanolamine titanates according to claim 1, characterised in that dialkoxy-bis(triethanolamino) titanium (IV) is reacted with at least one equivalent of glycol ethers corresponding to the alkoxy groups, the alcohol split off and possibly additionally the alcohol provided as solvent for the dialkoxy-bis(triethanolamino) titanium being separated off from the product obtained.

5. Process for the production of glycol ether group-containing triethanolamino titanates according to claim 1, characterised in that tetra-alkoxyalkylenoxytitanates are reacted with triethanolamine and the glycolmonoether split off is distilled off.

**Revendications**

1. Titanates de triéthanolamines solubles dans l'eau, caractérisés en ce que l'un des groupes alcoxy, ou les deux groupes alcoxy, est ou sont remplacés par des groupes éthers de glycols fixés sur l'atome de Ti central.

2. Le di-méthoxy-éthoxy-éthoxy-bis-(triéthanolamino)-titane-(IV).

3. Solutions de titanates de triéthanolamines selon la revendication 1 ou la revendication 2 dans des éthers de glycols, et contenant ces titanates en des proportions comprises entre 40 et 99 % en poids.

4. Procédé pour préparer des titanates de triéthanolamines contenant des groupes éthers de glycols selon la revendication 1, procédé caractérisé en ce qu'on fait réagir du dialcoxy-bis-(triéthanolamino)-titane (IV) avec au moins une quantité d'équivalents d'éthers de glycols correspondant au groupe alcoxy et l'on sépare du produit obtenu l'alcool qui s'est séparé et éventuellement en outre l'alcool présent comme solvant du dialcoxy-bis-(triéthanolamino)titane.

5. Procédé pour préparer des titanates de triéthanolamines contenant des groupes éthers de glycols selon la revendication 1, caractérisé en ce qu'on fait réagir les tétra-alcoxyalkylènoxytitanates avec la triéthanolamine et on chasse par distillation le monoéther de glycol séparé.